# EUROPEAN PATENT SPECIFICATION

(11) **EP 1 692 006 B1**
(45) Date of publication and mention of the grant of the patent: **09.07.2008**
(21) Application number: 03819101.1
(22) Date of filing: 02.12.2003
(51) Int. Cl.: B60N 2/427, B60N 2/433

(54) **A VEHICLE SEAT**
FAHRZEUGSITZ
SIEGE DE VEHICULE

(43) Date of publication of application: 23.08.2006
(73) Proprietor: AUTOLIV DEVELOPMENT AB, 447 83 Vargarda (SE)
(72) Inventor: SIMONSSON, Lennart, SE-447 83 Vargarda (SE); BOSTRÖM, Ola, Se-441 57 Alingsas (SE)
(74) Representative: Parry, Simon James
(86) International application number: PCT/SE2003/001860
(87) International publication number: WO 2005/054004

(56) References cited:
- GB-A- 2 330 068
- US-A- 6 164 720
- US-B1- 6 247 752

## Description

**THE PRESENT INVENTION** relates to a vehicle seat and more particularly relates to a vehicle seat to provide protection for a seat occupant in the event that a rear impact should occur.

It has been proposed previously to provide vehicle seats designed to provide protection for a seat occupant in the event that a rear impact should occur.

It has been found that, in the event of a rear impact, a seat within a vehicle is accelerated forwardly with a very high acceleration. This acceleration is imparted to the buttocks and torso of a seat occupant sitting on the seat, but is not directly imparted to the neck or head of the seat occupant. Thus the torso of the occupant may move forwardly, relative to the head, with a very high acceleration. The neck of the occupant becomes twisted, and eventually the neck of the occupant applies a rotational force to the head, and subsequently a forward acceleration force to the head. This applies a great strain to the neck and can give rise to so-called "whiplash" injuries.

In order to minimise the risk of such whiplash injuries occurring it has been proposed to provide a vehicle seat which, in the event of a rear impact, moves or tilts rearwardly during the initial stages of the impact, so enable the head of the seat occupant to be brought into engagement with the head-rest of the seat before the full acceleration is applied to the torso of the seat occupant.

In this way the head of the occupant may be accelerated almost simultaneously with the torso of the occupant, thus minimising any differential acceleration between the head and the torso. If the head and the torso are accelerated at the same rate, at the same time, then there is no twisting of the neck of the seat occupant.

Consequently various seats have been proposed which pivot or move rearwardly with the absorption of energy in response to a rear impact.

It has now been found that in the event of an extremely severe rear impact, a seat which tilts or moves rearwardly in a relatively ready manner may not be ideal, and may cause injuries which could be avoided.

US6247752 B1 (corresponding to the preamble of claim 1) discloses a vehicle seat arrangement in which a sensor sensitive to the severity of a rear-impact crash triggers actuation of a locking device if the crash indicating acceleration is above a predetermined threshold to block rearward movement of the seat in the vehicle.

The present invention seeks to provide an improved vehicle seat.

According to this invention there is provided a vehicle seat, at least part of the vehicle seat being movable rearwardly in the vehicle in response to forces applied to the seat in a rear impact on the vehicle, the seat being provided with a preventing mechanism, responsive to a signal from a sensor which senses a relatively high rear impact force to prevent any subsequent rearward movement of said at least part of the vehicle seat, characterised in that a retaining mechanism is provided to retain the seat in an initial position, the retaining mechanism being releasable in response to a signal from a rear impact sensor sensing a lower rear impact force.

Preferably the whole vehicle seat is movable rearwardly in response to said forces.
Alternatively the back-rest of the seat is movable rearwardly in response to said forces.

Conveniently said at least part of the vehicle seat moves rearwardly with a pivoting action in response to said forces.

Advantageously the preventing mechanism is in the form of a clamp.

Preferably the clamp is actuated by a pyrotechnic charge.

Conveniently the seat is provided with an energy absorbing element to absorb energy as the said at least part of the vehicle seat moves rearwardly.

Advantageously the energy absorbing unit incorporates a member which is deformed plastically as the unit absorbs energy.

Preferably the clamp engages said deformable member.

Advantageously the energy absorbing unit comprises a housing defining a passage therethrough, the deformable member comprising a strip extending through the passage, part of the strip being connected to said at least part of the vehicle seat, the housing being secured to part of the vehicle.

In order that the invention may be more readily understood, and so that further features thereof may be appreciated, the invention will now be described by way of example with reference to the accompanying drawings in which:
FIGURE 1 is a perspective view of an energy absorbing unit for use with a vehicle seat in accordance with the invention showing the energy absorbing unit in a first condition,
FIGURE 2 is a view corresponding to Figure 1 showing the energy absorbing unit in a second condition,
FIGURE 3 is a diagrammatic sectional view taken on the line III-III of Figure 1 showing the operative parts of a clamp forming a part of the energy absorbing unit of Figures 1 and 2,
FIGURE 4 is a diagrammatic view of a vehicle seat provided with the energy absorbing unit of Figures 1 to 3 in an initial condition,
FIGURE 5 is a view illustrating a seat in a second condition, and
FIGURE 6 is a view illustrating a seat in a third condition.

The invention will be described with reference to an embodiment in which a vehicle seat is provided, the vehicle seat being mounted to pivot rearwardly about a predetermined pivot axis in a rear impact situation. In the described embodiment the seat is held in an initial position by a retractable pin, the pin being retracted in response to a signal from a first sensor which indicates that a rear impact is occurring. When the pin has been retracted the seat may pivot rearwardly, and energy is absorbed by an energy absorbing unit. In the described embodiment a clamp is provided which responds to a signal from a second sensor, indicative of the fact that a high speed rear impact has occurred, the clamp engaging part of the energy absorbing unit and preventing further rearward movement of the seat.

However, it is to be appreciated that in alternative embodiments of the invention, the first sensor and the retractable pin may be omitted, and the described clamp may be replaced by an alternative mechanism which prevents any rearward movement of the seat or seat-back.

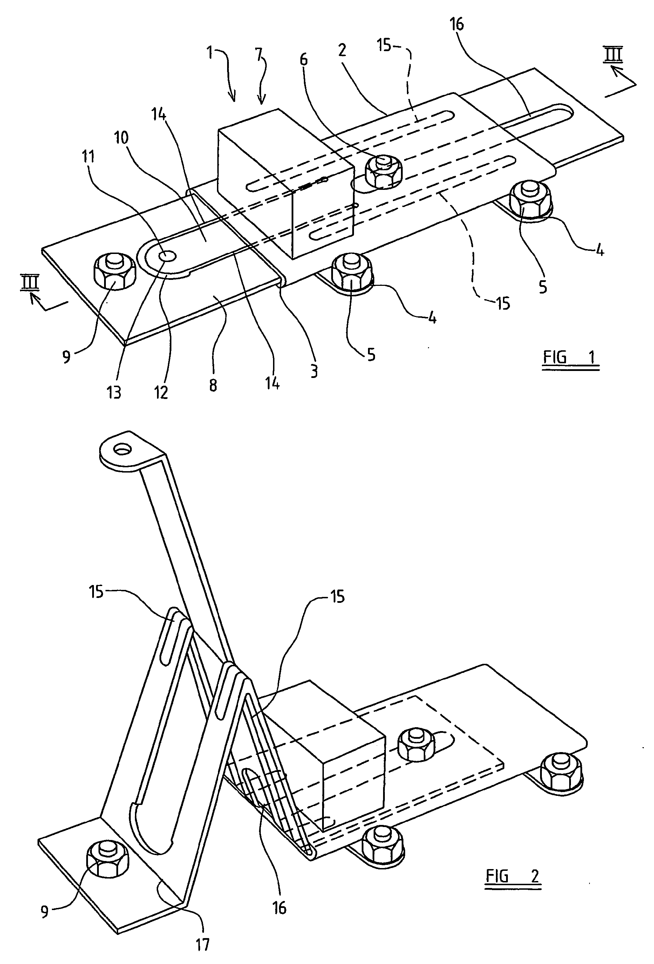

Turning initially to Figures 1 to 3 of the accompanying drawings, an energy absorbing unit 1 is provided, the energy absorbing unit being configured to be mounted to the floor of the vehicle and having a part thereof to be connected to a front leg of a vehicle seat.

The energy absorbing unit 1 includes a housing 2. The housing 2 is an elongate tubular housing of flattened section, the housing thus effectively defining a rectangular cross-sectioned horizontal slot 3 which extends throughout the whole length of the housing. The housing is provided with outwardly protruding lugs 4, which may be secured to the floor of a vehicle by means of fixing bolts 5. A further fixing bolt 6 extends through a central part of the housing to the floor of the vehicle.

The upper surface of the housing 2 is provided with an upwardly extending chamber 7 which contains a clamp as will be described below.

Received within the housing 2, and passing through the rectangular sectioned slot 3, is an elongate metal strip 8 of rectangular section. One end of the strip is secured to the floor of the vehicle by means of a mounting bolt 9. Between that end of the strip and a central region of the strip a deformable tongue 10 is defined. The tongue 10 has an arcuate end region 11 which is defined by an arcuate slot 12 cut through the metal strip 8. The end region 11 of the tongue 10 is provided with an aperture 13 to receive a fixing bolt. The sides of the tongue 10 are defined by parallel lines of mechanical weakness 14. The lines of mechanical weakness may be in the form of perforated lines or lines where the thickness of the metal is reduced.

Extending from positions on either side of the tongue 10, adjacent the base of the tongue 10, and extending towards the other end of the strip 8 are two ridges 15 which are provided to strengthen the metal strip 8. At the end of the strip 8 remote from the fixing bolt 9, a centrally located axial slot 16 is provided. The slot has two closed ends. The fixing bolt 6 passes through the slot 16 and in an initial condition of the energy absorbing unit the bolt 6 is located at the closed end of the slot 16 which is closest to the tongue 10.

It is to be appreciated that when the energy absorbing unit 1 is mounted in a motor vehicle, secured to the floor of the vehicle, and with the front leg of a seat connected to the forward end 11 of the tongue 10 by means of a bolt passing through the aperture 13, the fact that the tongue is effectively formed integrally with the strip 8 will mean that the seat will not readily pivot rearwardly, but instead will remain in the ordinary position unless a very large force is applied to the seat.

In the event that a rear impact should occur a large force may be applied to the seat which will cause the seat to pivot rearwardly, and a very large upward force will be applied to the forward end 11 of the tongue 10. The force will tend to draw the tongue 10, and also the rest of the strip 8, out of the housing 2. The tongue 10 will become separated from the rest of the strip as the lines 14 of mechanical weakness break. As the strip emerges from the housing, the strip is bent to extend upwardly, until the strip has the configuration shown in Figure 2. As can be seen, in Figure 2, the end region of the strip held in position by the bolt 9 remains in the initial position, and the strip 8 has become deformed so that a fold-line or crease 17 is established in the region of the arcuate slot 12, the portion of the strip 8 initially lying adjacent the sides 14 of the tongue 10 extending upwardly to an apex. The tongue 10 extends further up above the apex. It can be seen that the strip 8 has emerged from the housing 2, so that the slot 16 has moved past the bolt 6. The strip will continue to emerge until the bolt 6 engages the closed end of the slot 16 closest to the free end of the metal strip 8. As the strip is withdrawn from the housing so the strip, as reinforced by the ribs 15 is bent, thus absorbing energy, and the tongue 10 becomes separated from the strips, also absorbing energy.

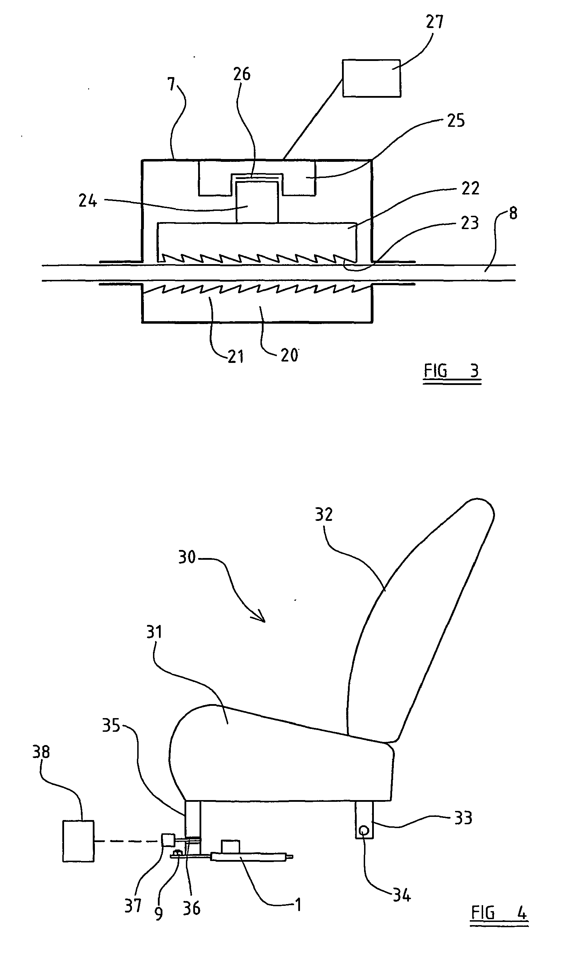

Turning now to Figure 3, a clamp is contained within the clamp chamber 7. Located in the base of the clamp chamber 7, beneath the metal strip 8, is a plate 20, the upper surface of which is serrated 21. Located immediately above the metal strip 8, within the clamp chamber 7, is a cooperating plate 22, the lower surface 23 of which is serrated. The plate 22 is associated with a piston 24 contained within a cylinder 25 which is mounted to the upper part of the chamber 7. A pyrotechnic material 26 is contained within the cylinder, and the pyrotechnic material is adapted to be ignited in response to a signal from a sensor 27. The sensor 27 senses a high acceleration, as experienced in a high speed or high energy rear impact. When the pyrotechnic material is ignited the piston 24 moves downwardly, thus bringing the serrations 23 on the plate 22 into contact with the metal strip 8 and also deflecting the metal strip 8 downwardly so that the metal strip engages the serrations 21 on the plate 20. The metal plate is thus firmly clamped in position, with the serrations engaging the strip 8. Thus the clamp acts as a preventing mechanism, preventing subsequent rearward movement of the seat, as the strip 8 cannot emerge from the housing 2 by virtue of the action of the clamp.

While one form of signal actuated clamp has been described, many alternate forms of clamp could be used. Instead of actuating the clamp with a pyrotechnic charge a solenoid could be used.

Turning now to Figures 4 to 6 of the accompanying drawings, a seat 30 to be mounted in a vehicle as illustrated, the seat having a squab 31 and a back-rest 32. The seat is provided with a rear leg 33. The rear leg 33 is mounted to a pivot axis 34 so that the entire seat may pivot rearwardly about the pivot axis 34.

An energy absorbing unit 1 of the type described above is provided mounted to the floor beneath the front leg 35 of the vehicle seat. The front leg 35 is connected to the energy absorbing unit.

In the described embodiment a retractable pin 36 is provided which engages part of the front leg of the vehicle seat in order to retain the vehicle seat in an operative position. The pin is to be retracted in the event that a rear impact is sensed. The pin is associated with a retractor 37 which may be a solenoid operated retractor or a pyrotechnic operated retractor. The retractor 37 is associated with a sensor 38, which is responsive to a rear impact.

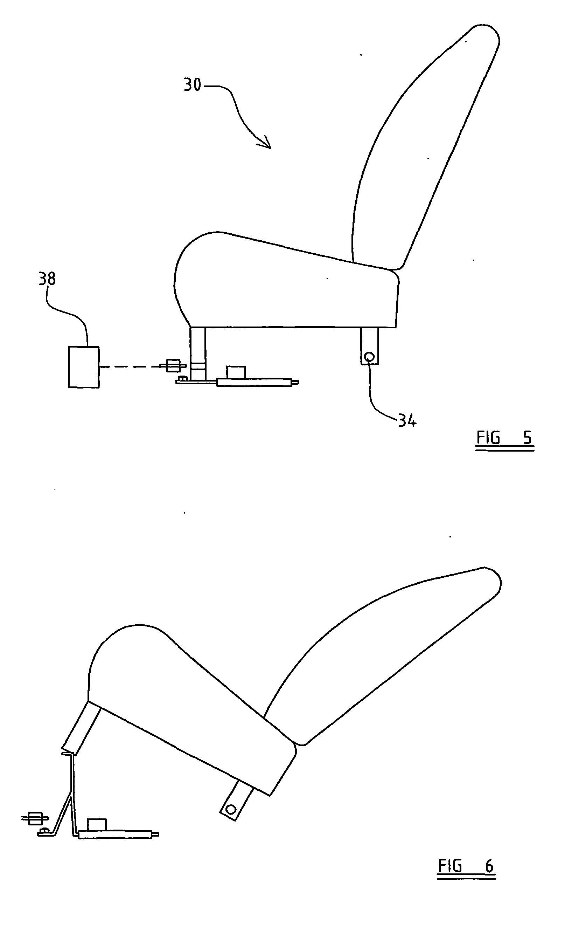

It is thus to be understood that in a rear impact situation initially the pin 36 is retracted, thus releasing the leg 35, enabling the seat to pivot rearwardly about the pivot axis 34 with energy being absorbed. Figure 5 illustrates the pin 36 in the retracted condition, and Figure 6 illustrates the seat pivoting rearwardly, with the metal strip 8 being withdrawn from the housing 2.

In the event, however, that a very severe rear impact is sensed by the sensor 27, the clamp within the clamp housing 7 will be actuated, and the serrations 21 and 23 will engage the metal strip 8 preventing the metal strip 8 from continuing to be paid-out from the housing 2. Thus rearward movement of the seat will be prevented or terminated.

It is to be understood that if the sensor 27 senses a rear impact of great energy simultaneously with the sensing of the rear impact by the sensor 38, the clamp may be actuated before the seat has moved rearwardly at all.

Whilst the invention has been described with reference to an embodiment in which a mechanism is provided to retain the seat in the initial position until an accident is sensed, it is to be understood that in alternative embodiments no such mechanism is provided, and the seat is retained in position by the configuration of the energy absorbing unit, until a large force is applied to the seat.

Whilst, in the described embodiment, a clamp is provided which engages part of the energy absorbing unit, alternative mechanisms may be provided to prevent the seat from initially moving rearwardly. Thus, for example, and extensible pin could be provided adapted to become engaged in an appropriately configured aperture formed in the front leg of the seat. Alternatively again a mechanism may be provided associated with the pivot axis actuable to prevent further pivoting of the seat.

Whilst the invention has been described with reference to an embodiment in which a complete seat moves pivotally, it is to be appreciated that the invention may be applied to vehicle seats in which the seat-back moves pivotally, with pivotal movement of the seat-back being prevented when a severe rear impact is sensed.

In the present Specification "comprises" means "includes or consists of" and "comprising" means "including or consisting of".

## Claims

1. A vehicle including a vehicle seat (30), at least part of the vehicle seat being movable rearwardly in the vehicle in response to forces applied to the seat in a rear impact on the vehicle, the seat being provided with a preventing mechanism (7, 8, 22-26), responsive to a signal from a sensor (27) which senses a relatively high rear impact force to prevent any subsequent rearward movement of said at least part of the vehicle seat, **characterised in that** a retaining mechanism (36, 37) is provided to retain the seat in an initial position, the retaining mechanism being releasable in response to a signal from a rear impact sensor (38) sensing a lower rear impact force.

2. A vehicle according to Claim 1 wherein the whole vehicle seat (30) is moveable rearwardly in response to said forces.

3. A vehicle according to Claim 1 wherein the backrest (32) of the seat (30) is moveable rearwardly in response to said forces.

4. A vehicle according to any of the preceding claims wherein said at least part of the vehicle seat moves rearwardly with a pivoting action in response to said forces.

5. A vehicle seat according to any one of the preceding claims wherein said preventing mechanism (7, 8, 22-26) is configured to engage said at least part of the vehicle seat or an element (8) connected to said at least part of the vehicle seat to prevent subsequent rearward movement of said at least part of the vehicle seat.

6. A vehicle according to Claim 6 wherein the preventing mechanism is in the form of a clamp (20, 21, 22).

7. A vehicle according to Claim 6 wherein the clamp is actuated by a pyrotechnic charge (26).

8. A vehicle according to any of the preceding claims wherein the seat is provided with an energy absorbing element (2, 8, 10) to absorb energy as said at least part of the vehicle seat (30) moves rearwardly.

9. A vehicle according to Claim 8 wherein the energy absorbing unit incorporates a deformable member (8, 10) which is deformed plastically as the unit absorbs energy.

10. A vehicle according to Claim 8 as dependent upon Claim 6 or Claim 7 wherein the clamp (20, 21, 22) engages said deformable member (8, 10).

11. A vehicle according to Claim 9 or Claim 10 wherein the energy absorbing unit (2, 8, 10) further comprises a housing (2) defining a passage therethrough, the deformable member (8, 10) comprising a strip extending through the passage, part (10) of the strip being connected to said at least part of the vehicle seat, the housing (2) being secured to part of the vehicle.

## Patentansprüche

1. Fahrzeug, beinhaltend einen Fahrzeugsitz (30), wobei mindestens ein Teil des Fahrzeugsitzes in dem Fahrzeug rückwärtig beweglich ist, als Reaktion auf Kräfte, die auf den sitz bei einem Heckaufprall auf das Fahrzeug ausgeübt werden, wobei der sitz mit einem Schutzmechanismus (7, 8, 22 - 26) bereitgestellt ist, welcher auf ein Signal von einem Sensor (27) reagiert, welcher eine relativ hohe Heckaufprallkraft misst, um irgendeine nachfolgende rückwärtige Bewegung des mindestens einen Teils des Fahrzeugsitzes zu verhindern, **dadurch gekennzeichnet, dass** ein Rückhaltemechanismus (36, 37) bereitgestellt wird, um den Sitz in einer Anfangsposition zurückzuhalten, wobei der RückhalteMechanismus lösbar als Reaktion auf ein Signal von einem Heckaufprallsensor (38) ist, welcher eine niedrigere Heckaufprallkraft misst.

2. Fahrzeug nach Anspruch 1, wobei der gesamte Fahrzeugsitz (30) als Reaktion auf die Kräfte rückwärtig beweglich ist.

3. Fahrzeug nach Anspruch 1, wobei die Lehne (32) des Sitzes (30) als Reaktion auf die Kräfte rückwärtig beweglich ist.

4. Fahrzeug nach irgendeinem der vorhergehenden Ansprüche, wobei sich der mindestens eine Teil des Fahrzeugsitzes mit einer Schwenkbewegung als Reaktion auf die Kräfte rückwärtig bewegt.

5. Fahrzeugsitz nach irgendeinem der vorhergehenden Ansprüche, wobei der Schutzmechanismus (7, 8, 22 - 26) konfiguriert ist, um den mindestens einen Teil des Fahrzeugsitzes oder eines Elements (8), welches mit dem mindestens einen Teil des Fahrzeugsitzes verbunden ist, einzurasten, um eine nachfolgende rückwärtige Bewegung des mindestens einen Teils des Fahrzeugsitzes zu verhindern.

6. Fahrzeug nach Anspruch 5, wobei der Schutzmechanismus in der Form einer Klemme (20, 21, 22) ist.

7. Fahrzeug nach Anspruch 6, wobei die Klemme durch eine pyrotechnische Ladung (26) betätigt wird.

8. Fahrzeug nach irgendeinem der vorhergehenden Ansprüche, wobei der Sitz mit einem energieabsorbierenden Element (2, 8, 10) bereitgestellt ist, um Energie zu absorbieren, wenn sich der mindestens eine Teil des Fahrzeugsitzes (30) rückwärtig bewegt.

9. Fahrzeug nach Anspruch 8, wobei die energieabsorbierende Einheit ein deformierbares Element (8, 10) einschließt, welches plastisch deformiert wird, wenn die Einheit Energie absorbiert.

10. Fahrzeug nach Anspruch 8, wie von Anspruch 6 oder Anspruch 7 abhängig, wobei die Klemme (20, 21, 22) das deformierbare Element (8, 10) einrastet.

11. Fahrzeug nach Anspruch 9 oder Anspruch 10, wobei die energieabsorbierende Einheit (2, 8, 10) weiter ein Gehäuse (2) aufweist, welches einen Durchgang hindurch definiert, wobei das deformierbare Element (8, 10) einen streifen aufweist, welcher sich durch den Durchgang erstreckt, wobei ein Teil (10) des Streifens mit dem mindestens einen Teil des Fahrzeugsitzes verbunden ist, wobei das Gehäuse (2) mit einem Teil des Fahrzeugs gesichert ist.

## Revendications

1. Véhicule comprenant un siège de véhicule (30), au moins une partie du siège de véhicule pouvant être déplacé vers l'arrière dans le véhicule en réponse à des forces appliquées au siège lors d'un impact arrière sur le véhicule, le siège étant doté d'un mécanisme de blocage (7, 8, 22-26), sensible à un signal d'un capteur (27) qui détecte une force d'impact arrière relativement élevée pour empêcher tout mouvement vers l'arrière consécutif de ladite au moins une partie du siège de véhicule, **caractérisé en ce qu'**un mécanisme de retenue (36, 37) est prévu pour retenir le siège dans une position initiale, le mécanisme de retenue pouvant être relâché en réponse à un signal d'un capteur d'impact arrière (38) détectant une force d'impact arrière inférieure.

2. Véhicule selon la revendication 1, dans lequel l'ensemble du siège de véhicule (30) peut être déplacé vers l'arrière en réponse auxdites forces.

3. Véhicule selon la revendication 1, dans lequel le dossier (32) du siège (30) peut être déplacé vers l'arrière en réponse auxdites forces.

4. Véhicule selon l'une quelconque des revendications précédentes, dans lequel ladite au moins une partie du siège de véhicule se déplace vers l'arrière avec une action de pivot en réponse auxdites forces.

5. Véhicule selon l'une quelconque des revendications précédentes, dans lequel ledit mécanisme de blocage (7, 8, 22-26) est configuré pour engager ladite au moins une partie du siège de véhicule ou un élément (8) relié à ladite au moins une partie du siège de véhicule afin d'empêcher un mouvement arrière consécutif de ladite au moins une partie du siège de véhicule.

6. Véhicule selon la revendication 6, dans lequel le mécanisme de blocage se présente sous la forme d'une bride (20, 21, 22).

7. Véhicule selon la revendication 6, dans lequel la bride est actionnée par une charge pyrotechnique (26).

8. Véhicule selon l'une quelconque des revendications précédentes, dans lequel le siège est pourvu d'un élément d'absorption d'énergie (2, 8, 10) afin d'absorber de l'énergie à mesure que ladite au moins une partie du siège de véhicule (30) se déplace vers l'arrière.

9. Véhicule selon la revendication 8, dans lequel l'unité d'absorption d'énergie comprend un élément déformable (8, 10) qui est déformé de manière plastique à mesure que l'unité absorbe de l'énergie.

10. véhicule selon la revendication 8 dépendante de la revendication 6 ou de la revendication 7, dans lequel la bride (20, 21, 22) s'engage avec ledit élément déformable (8, 10).

11. Véhicule selon la revendication 9 ou la revendication 10, dans lequel l'unité d'absorption d'énergie (2, 8, 10) comprend en outre un boîtier (2) définissant un passage traversant, l'élément déformable (8, 10) comprenant une bande s'étendant à travers le passage, une partie (10) de la bande étant reliée à ladite au moins une partie du siège de véhicule, le boîtier (2) étant fixé à une partie du véhicule.
